# EUROPEAN PATENT APPLICATION

(11) **EP 4 683 143 A1**
(43) Date of publication of application: **21.01.2026**
(21) Application number: 25187509.2
(22) Date of filing: 04.07.2025
(51) Int. Cl.: H02G 3/32

(54) **CABLE RESTRAINT FOR FLEXIBLE POWER CABLES**

(30) Priority: 17.07.2024 US 202418775045
(71) Applicant: Panduit Corp., Tinley Park, Illinois 60487 (US)
(72) Inventor: Rouleau, Rodney G., Tinley Park (US); DeMik, Jonathan, Tinley Park (US)
(74) Representative: Roberts, Gwilym Vaughan

(57) **Abstract**

A cable restraint secures flexible cables during a short circuit event. The cable restraint includes an outer belt and an inner liner. The outer belt has a first end and a second end. Flanges extend from the first end and the second end of the outer belt in a staggered pattern to form an intermeshing coupler when the cable restraint is in a closed position. The outer belt flexes and moves with the cables during the short circuit event thereby limiting lateral movement of the flexible cables.

## Description

### Field

The present disclosure relates to cable restraints, and more particularly to cable restraints for securing flexible power cables.

### Background

Cable cleats have been used to control the movement of power cables during short circuit events. The International Electrotechnical Commission published a standard, IEC 61914, that specifies requirements and testing of cable cleats. IEC 61914 is directed to cables defined in Class 2, Class B, or Class C. The current standard does not encompass flexible (fine strand) cables (e.g., Class 5, DLO, Class 1, Class K). It is anticipated that requirements for flexible cables will be added to new and current cable cleat standards. Short circuit testing with flexible cables (e.g., Class 5) produced the results that flexible cables spread much further than a typical Class 2 cable during and after a short circuit event. The excessive spreading of the flexible cables will potentially damage the flexible cables and other cables or items positioned near the flexible cables. As a result, it is apparent that the flexible cables will need to be restrained differently than a standard cable in environments that encounter short circuit events in order to prevent excessive spreading of the cables and damage to the surrounding area.

Thus, there is a need for a cable restraint, to be used along with cable cleats, that is designed to secure and control the movement of flexible cables in an environment that encounters short circuit events.

### Summary

The present disclosure is directed to a cable restraint used to secure flexible cables during a short circuit event. The cable restraint includes an outer belt and an inner liner positioned adjacent to the outer belt. The outer belt has a first end and a second end. Flanges extend from the first end and the second end of the outer belt in a staggered pattern. The flanges form an intermeshing coupler when the cable restraint is in a closed position. The outer belt of the closed cable restraint flexes and moves with the cables during the short circuit event thereby limiting lateral movement of the cables.

### Brief Description of the Drawings

FIG. 1 is a perspective view of the cable restraint for flexible cables of the present disclosure.
FIG. 2 is a perspective view of the cable restraint of FIG. 1 with the fastener removed and the cable restraint in an open position.
FIG. 3 is a perspective view of the open cable restraint of FIG. 2 with flexible cables in a trefoil configuration positioned on the cable restraint.
FIG. 4 is a perspective view of the cable restraint and trefoil cable configuration of FIG. 3 with the cable restraint in a closed position around the flexible cables.
FIG. 5 is a perspective view of the cable restraint of FIG. 4 with a fastener securing the cable restraint.
FIG. 6 is a perspective view of the cable restraint and flexible cables of FIG. 5 after a short circuit event.
FIG. 7 is a perspective view of the cable restraint of FIG. 1 with the intermeshing coupler and fastener located at the top of the cable restraint.
FIG. 8 is a perspective view of the cable restraint of FIG. 7 with the fastener removed and the cable restraint in an open position.
FIG. 9 is a perspective view of the open cable restraint of FIG. 8 with flexible cables in a trefoil configuration positioned on the cable restraint.
FIG. 10 is a perspective view of the cable restraint and trefoil cable configuration of FIG. 9 with the cable restraint in a closed position around the flexible cables.
FIG. 11 is a perspective view of the cable restraint of FIG. 10 with a fastener securing the cable restraint.
FIG. 12 is a perspective view of the cable restraint and flexible cables of FIG. 11 after a short circuit event.
FIG. 13 is a perspective view of the open cable restraint of FIG. 8 with an alternative fastener to secure the cable restraint.
FIG. 14 is a perspective view of the cable restraint and alternative fastener of FIG. 13 in a closed secured position.

### Detailed Description

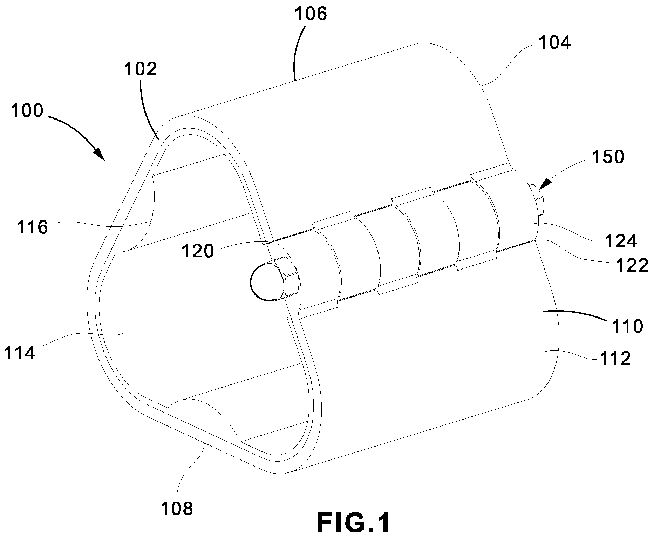

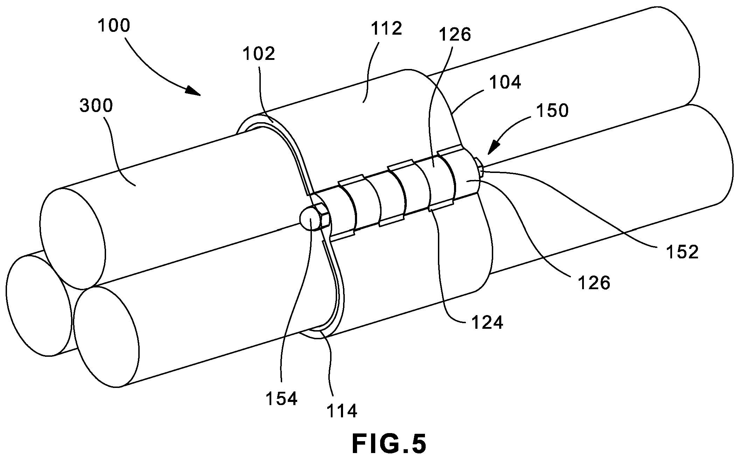

FIG. 1 illustrates the cable restraint 100 of the present disclosure. In the closed position, the cable restraint 100 has a triangular shape to accommodate flexible cables that are laid out in a trefoil configuration. The cable restraint 100 has a front 102, a back 104, a top 106, a bottom 108, and sides 110. The cable restraint 100 is intended to be used between traditional cable cleats, such as the cable cleat described in commonly assigned U.S. Patent Nos. 10,731,777; 10,731,778; 10,923,892; 10,938,192; and 11,199,278, herein incorporated by reference, to keep flexible power cables 300 (see FIG. 5) from excessive spreading during a short circuit event.

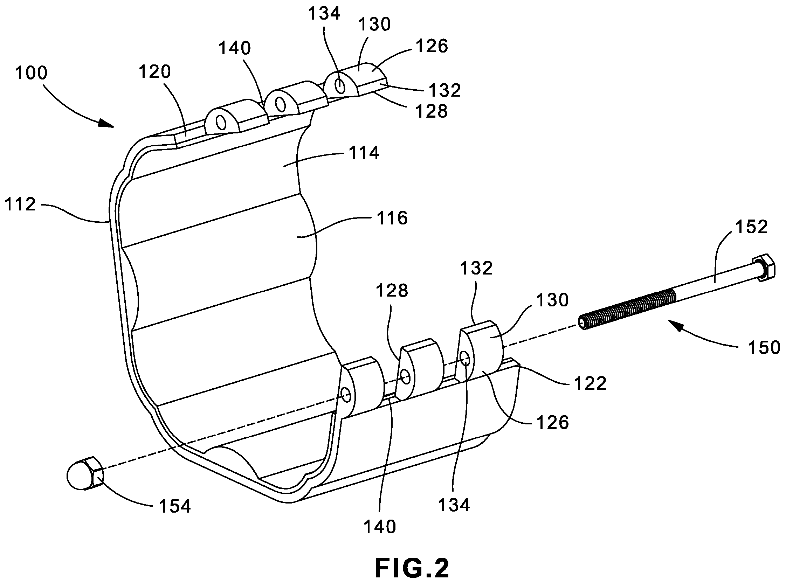

FIG. 2 illustrates the cable restraint 100 in an open position with the fastener 150 removed from the cable restraint. The cable restraint 100 includes an outer belt 112 made from a polyurethane. The outer belt 112 flexes and moves with the flexible cables during a short circuit event thereby limiting lateral movement of the cables. The cable restraint 100 also includes a soft inner liner 114. The inner liner 114 enables range taking and thermal expansion and contraction of the flexible cables. The inner liner 114 compresses for faster installation around the flexible cables. The inner liner 114 also provides interference or compliance to keep the cable restraint 100 in place. The inner liner 114 includes a plurality of lobes 116 for further range taking and resistance to axial movement during normal operating conditions. The inner liner 114 material is over molded onto the polyurethane outer belt 112.

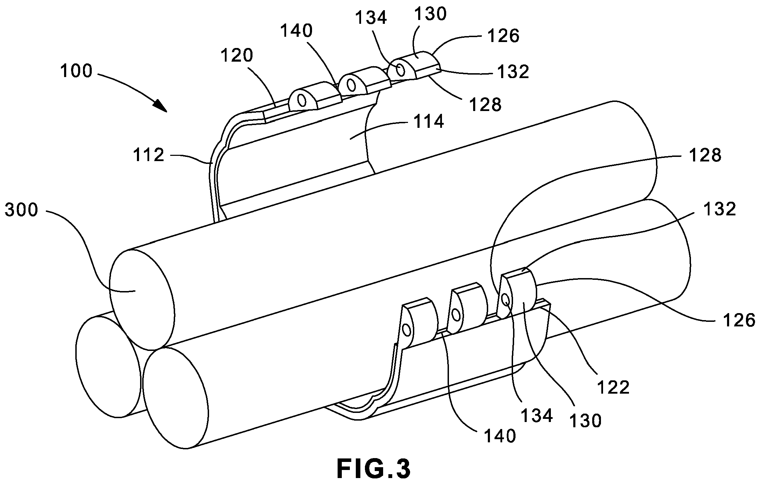

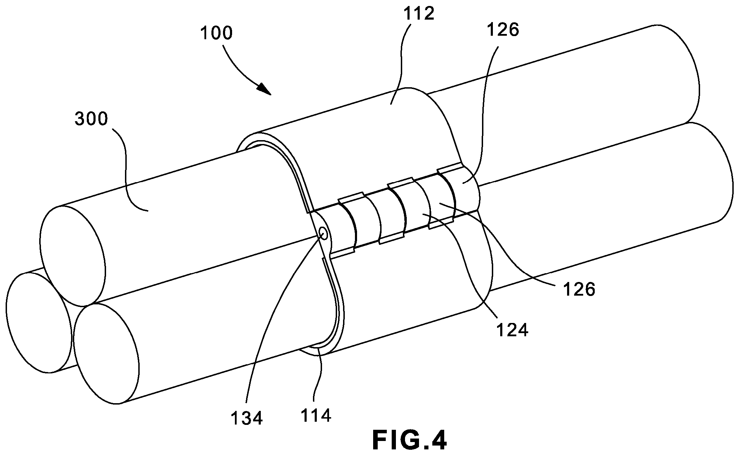

The outer belt 112 includes a first end 120 and a second end 122. Flanges 126 extend from the first end 120 and the second end 122 in a staggered pattern to form an intermeshing coupler 124 when the cable restraint 100 is in the closed position (see FIGS. 1 and 4). As illustrated in FIGS. 1-5, the first end 120 and the second end 122 are positioned along one side 110 of the cable restraint 100. As a result, the intermeshing coupler 124 is formed on one of the sides 110 of the cable restraint 100.

Each flange 126 extends from either the first end 120 or the second end 122 of the cable restraint 100. Each flange 126 includes a straight bottom 128, a curved top 130, and a flat distal edge 132. Each flange 126 also includes a central hole 134 therethrough. The center holes 134 aligned to receive a fastener 150 that secures the cable restraint 100 in a closed position. There is an open area 140 between each flange 126 sized to receive a flange 126 extending from the opposite end of the outer belt 112. When the first end 120 of the cable restraint 100 is brought towards the second end 122 of the cable restraint 100, the flat distal edge 132 of each flange 126 abuts the first end 120 or the second end 122 of the cable restraint 100. The flanges 126 are positioned adjacent to each other to form the intermeshing coupler 124. As illustrated in FIG. 4, the holes 134 in the flanges 126 are aligned to receive the fastener 150 to secure the cable restraint 100.

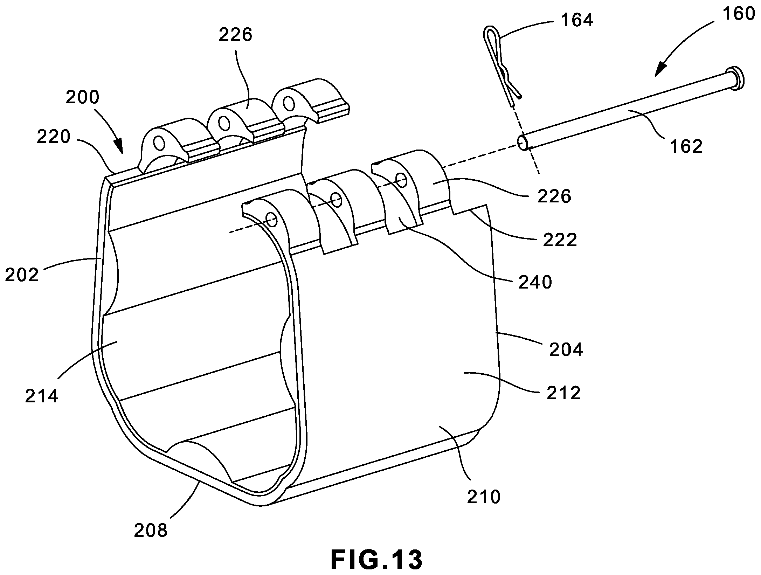

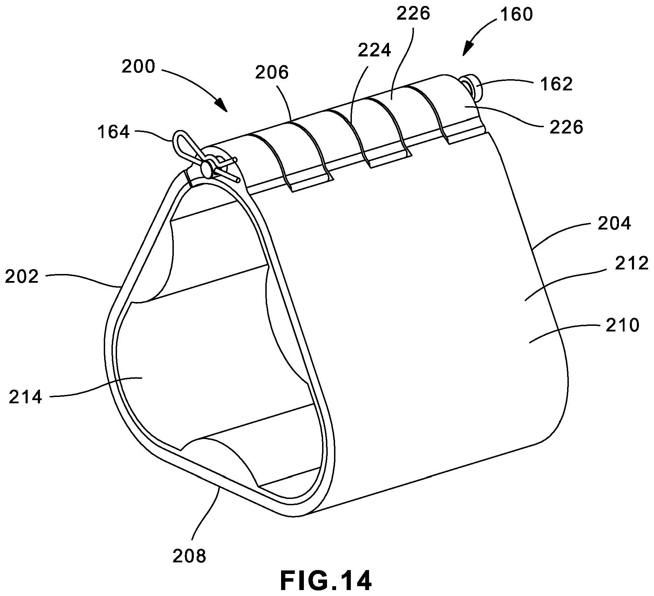

As illustrated in FIG. 5, the fastener 150 is positioned within the holes 134 in the flanges 126. The head of the fastener 150 is positioned at the back 104 of the cable restraint 100 while the free end of the fastener 150 is accessible at the front 102 of the cable restraint 100 for receiving a nut. The fastener 150 shown consists of a bolt 152 and an acorn nut 154; however, it is contemplated to use other fasteners to secure the cable restraint (see FIGS. 13-14).

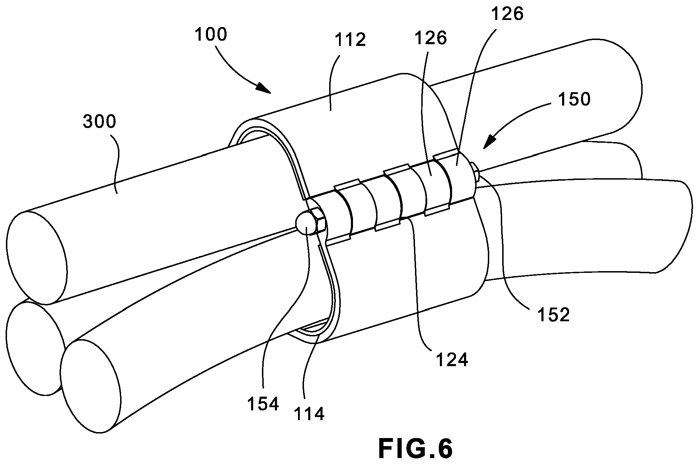

FIG. 6 illustrates the cable restraint 100 and flexible cables 300 after a short circuit event. The cable restraint 100 limits the movement of the flexible cables 300 thereby preventing the cables 300 from damaging the flexible cables and other cables or items positioned near the flexible cables.

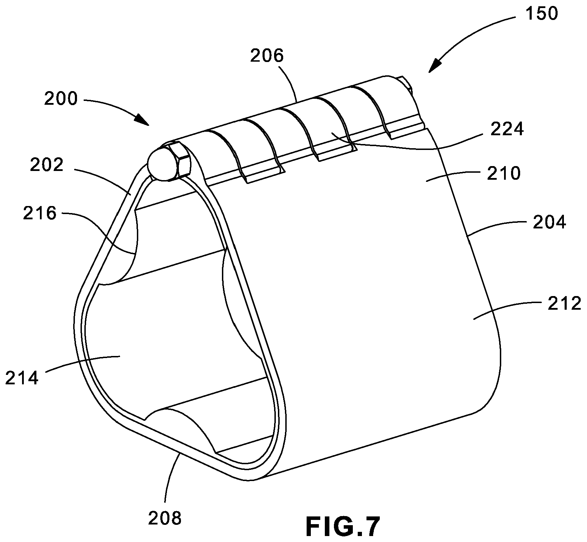

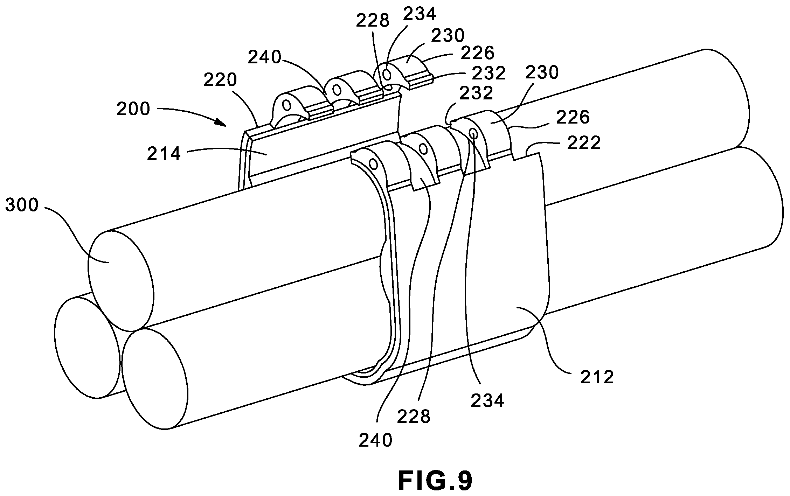

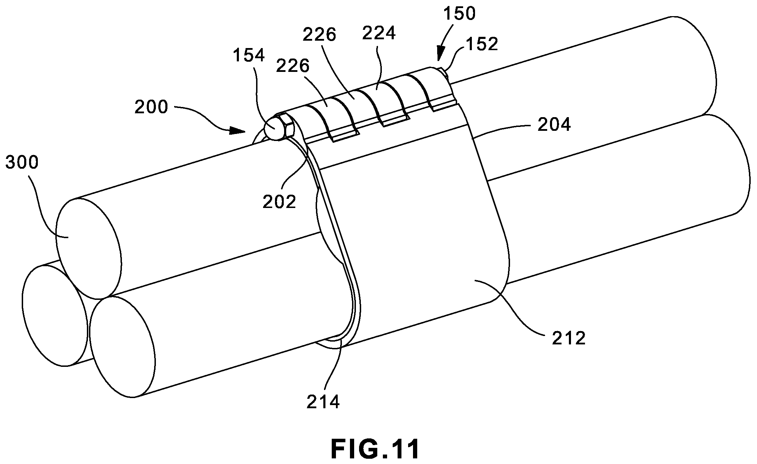

FIGS. 7-12 illustrate an alternative cable restraint 200 of the present disclosure. The cable restraint 200 includes a front 202, a back 204, a top 206, a bottom 208, and sides 210. As discussed above, the cable restraint 200 is intended to be used between traditional cable cleats to keep flexible power cables 300 (see FIG. 11) from excessive spreading during a short circuit event.

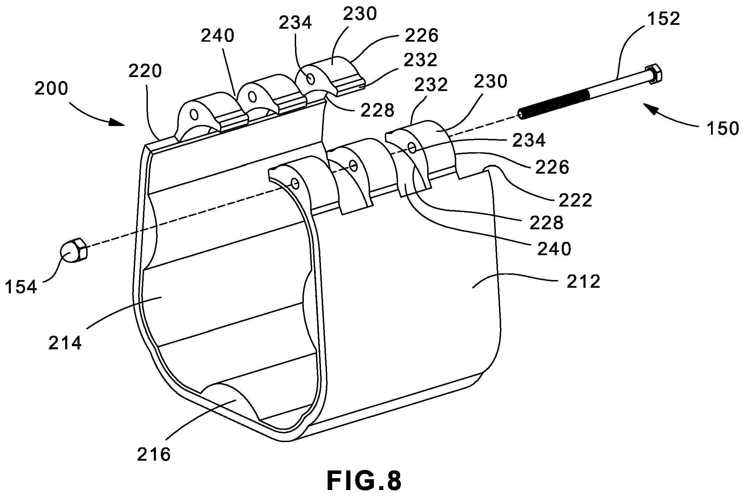

FIG. 8 illustrates the cable restraint 200 in an open position with the fastener 150 removed from the cable restraint 200. The cable restraint 200 includes an outer belt 212 made from a polyurethane. The outer belt 212 flexes and moves with the flexible cables during a short circuit event thereby limiting lateral movement of the cables. The cable restraint 200 also includes a soft inner liner 214. The inner liner 214 enables range taking and thermal expansion and contraction of the flexible cables. The inner liner 214 compresses for faster installation around the flexible cables. The inner liner 214 also provides interference or compliance to keep the cable restraint 200 in place. The inner liner 214 includes a plurality of lobes 216 for further range taking and resistance to axial movement during normal operating conditions. The inner liner 214 material is over molded onto the polyurethane outer belt 212.

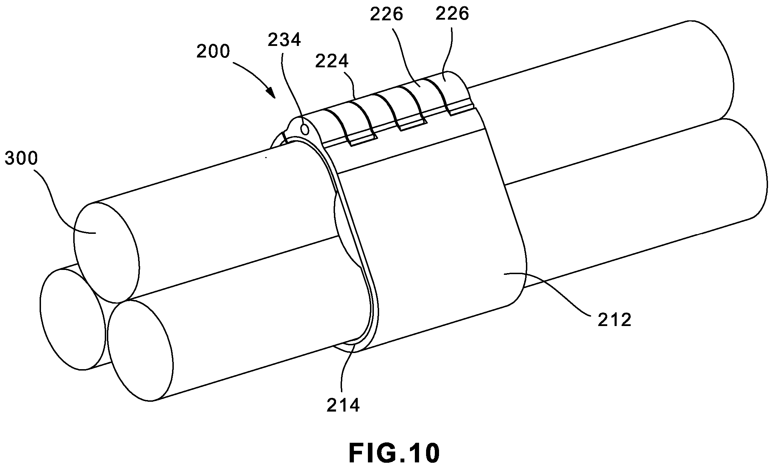

The outer belt 212 includes a first end 220 and a second end 222. Flanges 226 extend from the first end 220 and the second end 222 in a staggered pattern to form an intermeshing coupler 224 when the cable restraint 200 is in the closed position (see FIGS. 7 and 10). The first end 220 and the second end 222 are positioned at the top 206 of the cable restraint 200. As a result, the intermeshing coupler 224 is formed at the top 206 of the cable restraint 200.

Each flange 226 extends from either the first end 220 or the second end 222 of the cable restraint 200. Each flange 226 includes a curved bottom 228, a curved top 230, and a flat distal edge 232. Each flange 226 also includes a central hole 234. The center holes 234 align to receive a fastener 150 that secures the cable restraint 100 in a closed position. There is an open area 240 between each flange 226 sized to receive the flange 226 extending from the opposite end of the outer belt 212. When the first end 220 of the cable restraint 200 is brought towards the second end 222 of the cable restraint 200, the flat distal edge 232 of each flange 226 abuts the first end 220 or the second end 222 of the cable restraint 200. The flanges 226 are positioned adjacent to each other to form the intermeshing coupler 224. As illustrated in FIG. 10, the holes 234 in the flanges 226 are aligned to receive the fastener 150 to secure the cable restraint 200.

As illustrated in FIG. 11, the fastener 150 is positioned within the holes 234 in the flanges 226. The head of the fastener 150 is positioned at the back 204 of the cable restraint 200 while the free end of the fastener 150 is accessible at the front 202 of the cable restraint 200 for receiving a nut. The fastener shown consists of a bolt 150 and an acorn nut 154; however, it is contemplated to use other fasteners to secure the cable restraint (see FIGS. 13-14).

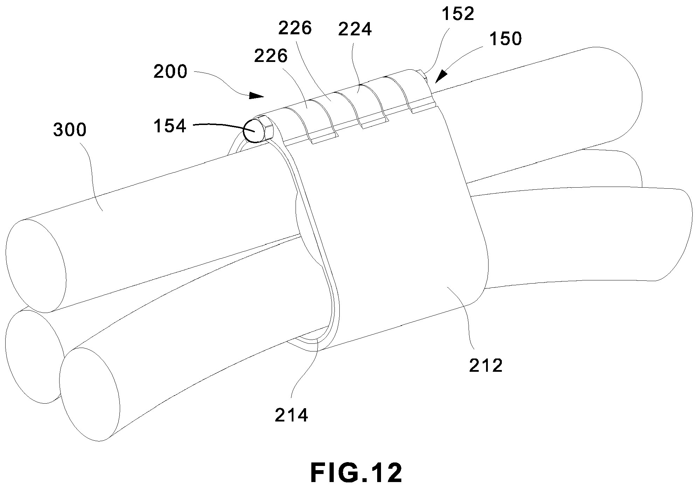

FIG. 12 illustrates the cable restraint 200 and flexible cables 300 after a short circuit event. The cable restraint 200 limits the movement of the flexible cables 300 thereby preventing the cables from damaging the flexible cables and other cables or items positioned near the flexible cables.

FIGS. 13-14 illustrate the cable restraint 200 with the intermeshing coupler 224 formed at the top 206 of the cable restraint 200 with an alternative fastener 160. The fastener 160 includes a clevis bolt 162 and pin 164. The clevis bolt 162 extends through the aligned holes 234 in the flanges 226 with a free end of the clevis bolt 162 accessible at the front 202 of the cable restraint 200 for receiving the pin 164 to secure the cable restraint 200. The clevis bolt 162 and pin 164 may also be used to secure the cable restraint 100 illustrated in FIGS. 1-6. It is contemplated that other fasteners, which may or may not require tools, may be used to secure the cable restraints.

The cable restraint will be shipped to customers in a flat configuration. An installer would choose the proper location for installing the cable restraint along the line of cables between previously positioned cable cleats. The cable restraint is wrapped around the cable bundle, typically a trefoil cable configuration. The flanges extending from the first end and the second end are laced together to form the intermeshing coupler. The installer inserts a fastener in the center hole at the back of the cable restraint. The installer threads the fastener through the aligned center holes of the flanges. The outer belt and the inner liner can be manipulated to help the center holes align, if necessary. Once the free end of the fastener has reached the front of the cable restraint, an acorn nut is threaded onto the fastener to complete the installation. Other fasteners, such as a clevis bolt and pin, may be used to install the cable restraint as discussed above.

The cable restraint of the present disclosure limits lateral movement, provides resistance to axial movement, and limits damage caused by flexible power cables during a short circuit event. The cable restraint does not require any brackets or connection to a structure. The cable restraints cost less and are easier to install compared to traditional cable cleats. The cable restraint is scalable depending on cable diameters and the number of cables.

Furthermore, while the particular preferred embodiments of the present disclosure have been shown and described, it will be obvious to those skilled in the art that changes and modifications may be made without departing from the teaching of the disclosure. The matter set forth in the foregoing description and accompanying drawings is offered by way of illustration only and not as limitation. The actual scope of the invention is intended to be defined in the following claims when viewed in their proper perspective.

## Claims

1. A cable restraint for securing flexible cables during a short circuit event, the cable restraint comprising:
an outer belt with a first end and a second end;
an inner liner adjacent the outer belt; and
flanges extending from the first end and the second end of the outer belt in a staggered pattern, wherein the flanges form an intermeshing coupler when the cable restraint is in a closed position;
whereby the outer belt flexes and moves with the flexible cables during the short circuit event thereby limiting lateral movement of the flexible cables.

2. The cable restraint of claim 1, wherein the cable restraint has a front, a back, a top, a bottom, and sides.

3. The cable restraint of claim 2, wherein the intermeshing coupler is formed along one of the sides of the cable restraint.

4. The cable restraint of any of claims 2 or 3, wherein the intermeshing coupler is formed on the top of the cable restraint.

5. The cable restraint of any preceding claim, wherein the outer belt is made from polyurethane.

6. The cable restraint of any preceding claim, wherein the inner liner is over molded onto the outer belt.

7. The cable restraint of any preceding claim, wherein the inner liner has a plurality of lobes for providing range taking and resistance to axial movement of the flexible cables secured in the cable restraint.

8. The cable restraint of any preceding claim, further comprising an open area between each flange extending from the first end and the second end of the outer belt for receiving one of the flanges extending from the first end and the second end of the outer belt.

9. The cable restraint of any preceding claim, wherein the first end of the outer belt is brought towards the second end of the outer belt; and wherein a flat distal edge of each flange abuts one of the first and second ends of the outer belt when the cable restraint is in the closed position.

10. The cable restraint of any preceding claim, wherein each flange includes a center hole, the center holes in the flanges align to receive a fastener to secure the cable restraint.

11. The cable restraint of any preceding claim, wherein each flange has a straight bottom, a curved top, and a flat distal edge.

12. The cable restraint of claim 11, wherein each flange has a central hole therethrough for receiving a fastener to secure the cable restraint.

13. The cable restraint of any preceding claim, wherein each flange has a curved bottom, a curved top, and a flat distal edge.

14. The cable restraint of claim 13, wherein each flange has a central hole therethrough for receiving a fastener to secure the cable restraint.

15. Use of the cable restraint of any preceding claim for controlling the movement of power cables during a short circuit event.
